# EUROPEAN PATENT SPECIFICATION

(11) **EP 3 420 692 B1**
(45) Date of publication and mention of the grant of the patent: **01.12.2021**
(21) Application number: 16891821.7
(22) Date of filing: 24.02.2016
(51) Int. Cl.: H04L 12/913, H04L 12/749, H04L 12/715

(54) **DATA STREAMING WITH LAYER 2 AND LAYER 3 RESERVATIONS**
DATEN-STREAMING MIT SCHICHT-2- UND SCHICHT-3-RESERVIERUNGEN
TRANSMISSION DE DONNÉES EN CONTINU AVEC RÉSERVATIONS DE COUCHE 2 ET DE COUCHE 3

(43) Date of publication of application: 02.01.2019
(73) Proprietor: Harman International Industries, Incorporated, Stamford, CT 06901 (US)
(72) Inventor: GUNTHER, Craig, Salt Lake City, Utah 84121 (US)
(74) Representative: Rummler, Felix
(86) International application number: PCT/US2016/019415
(87) International publication number: WO 2017/146702

(56) References cited:
- US-A1- 2009 049 175
- US-A1- 2013 182 604
- US-A1- 2014 022 938
- JAIHYUNG CHO ET AL: "SRP Requirement for Compatibility with RSVP ; avb-cho-SRP-req-RSVP-060711", IEEE DRAFT; AVB-CHO-SRP-REQ-RSVP-060711, IEEE-SA, PISCATAWAY, NJ USA, vol. 802.1, 12 July 2006 (2006-07-12), pages 1-9, XP068006750, [retrieved on 2006-07-12]
- FELIX FENG: "Interfacing between SRP and RSVP or other applications ; at-feng-SRP-RSVP-r3-060714", IEEE DRAFT; AT-FENG-SRP-RSVP-R3-060714, IEEE-SA, PISCATAWAY, NJ USA, vol. 802.1, 14 July 2006 (2006-07-14), pages 1-9, XP068006752, [retrieved on 2006-07-14]
- "IEEE P802.1Qat/D6.1 Draft Standard for Local and Metropolitan Area Networks- Virtual Bridged Local Area Networks - Amendment XX: Stream Reservation Protocol (SRP) ; 802-1at-d6-1-cb", IEEE DRAFT; 802-1AT-D6-1-CB, IEEE-SA, PISCATAWAY, NJ USA, vol. 802.1, no. d6-1-cb, 7 June 2010 (2010-06-07), pages 1-110, XP017638191, [retrieved on 2010-06-07]

## Description

### BACKGROUND

### Field of the Various Embodiments

The various embodiments relate generally to data networks and, more specifically, to data streaming with layer 2 and layer 3 reservations.

### Description of the Related Art

Audio Video Bridging (AVB), also referred to as "Ethernet AV," is a network standard that provides a robust environment for digital content delivery, such as real-time streaming of digital audio and video content to multiple devices and locations within a data network. Generally, AVB enables audio samples and video frames to be delivered with high quality-of-service (i.e., synchronized and on-time) by providing bandwidth reservations, guaranteed low latency, and a timing mechanism for synchronization. Because of this enhanced quality, AVB networks are now used for various commercial and consumer applications, including video conferencing, home theater, and in-vehicle infotainment systems.

Despite the growing popularity of AVB networks, AVB is not well-suited for networks that extend beyond a relatively confined topology, such as a single room or vehicle. For example, establishing and utilizing an AVB network across an Internet connection or across an extensive physical campus is generally impracticable. More specifically, in an AVB network that spans part of the Internet, the potentially high latency inherent in Internet connections can prevent the AVB network from functioning with the required quality-of-service. In an AVB network that spans a sizeable campus, tracking and synchronizing the potentially large number of network devices within the AVB network, such as all possible talker and listener nodes, can be difficult or impossible to implement. As a result, achieving real-time, high quality-of-service streaming of audio and video content across a network is problematic when the network extends across a large geographical area and/or includes a large number of talker and listener nodes.

As the foregoing, what would be useful are techniques for establishing a data stream between talker and listener devices included within an extended AVB network.

JAIHYUNG CHO ET AL, "SRP Requirement for Compatibility with RSVP ; avb-cho-SRP-req-RSVP-060711", IEEE DRAFT; AVB-CHO-SRP-REQ-RSVP-060711, IEEE-SA, PISCATAWAY, NJ USA, (20060712), vol. 802.1, pages 1 - 9, describes a method pertaining to the features of the preamble of claim 1.

FELIX FENG, "Interfacing between SRP and RSVP or other applications ; at-feng-SRP-RSVP-r3-060714", IEEE DRAFT; AT-FENG-SRP-RSVP-R3-060714, IEEE-SA, PISCATAWAY, NJ USA, (20060714), vol. 802.1, pages 1 - 9, describes a method pertaining to the technological background of the present invention.

### SUMMARY

The present invention is defined in the independent claims. Preferred features are recited in the sub-claims.

The various embodiments set forth a method of establishing a connection between a talker device and a listener device over a network. The method comprises receiving first stream identification information for a first data stream segment disposed in a first layer 2 domain that includes a talker device, based at least in part on a mapping of the first stream identification information to the second stream identification information, determining second stream identification information for a second data stream segment that links the first layer 2 domain to a second layer 2 domain that includes a listener device, and transmitting the second stream identification information to the second layer 2 domain via a layer 3 protocol.

At least one advantage of the disclosed embodiments is that the quality-of-service and latency benefits associated with an AVB network can be implemented across a data network that is geographically extensive and/or includes a large number of possible talker/listener nodes.

### BRIEF DESCRIPTION OF THE SEVERAL VIEWS OF THE DRAWINGS

So that the manner in which the above recited features of the various embodiments can be understood in detail, a more particular description of the various embodiments, briefly summarized above, may be had by reference to embodiments, some of which are illustrated in the appended drawings. It is to be noted, however, that the appended drawings illustrate only typical embodiments and are therefore not to be considered limiting of its scope, for the various embodiments may admit to other equally effective embodiments.
Figure 1 is a schematic diagram of a network configured to implement one or more aspects of various embodiments;
Figure 2A is a schematic diagram of a Talker Advertise packet, configured to implement one or more aspects of various embodiments;
Figure 2B is a schematic diagram of a Resource Reservation Protocol (RSVP) protocol data unit (PDU), configured to implement one or more aspects of various embodiments;
Figure 3 is a schematic illustration of a protocol exchange that occurs to support the transmission of a data stream between the talker device and the listener device of Figure 1, according to various embodiments;
Figure 4 is a schematic illustration of a protocol exchange that occurs to support the transmission of a data stream between the talker device and the listener device of Figure 1, according to various other embodiments;
Figure 5 is a schematic illustration of a network device, configured to implement one or more aspects of various embodiments;
Figure 6 sets forth a flowchart of method steps for establishing a connection between a talker device and a listener device over a network, according to various embodiments; and
Figure 7 sets forth a flowchart of method steps for establishing a connection between a talker device and a listener device over a network, according to the various other embodiments.

For clarity, identical reference numbers have been used, where applicable, to designate identical elements that are common between figures. It is contemplated that features of one embodiment may be incorporated in other embodiments without further recitation.

### DETAILED DESCRIPTION

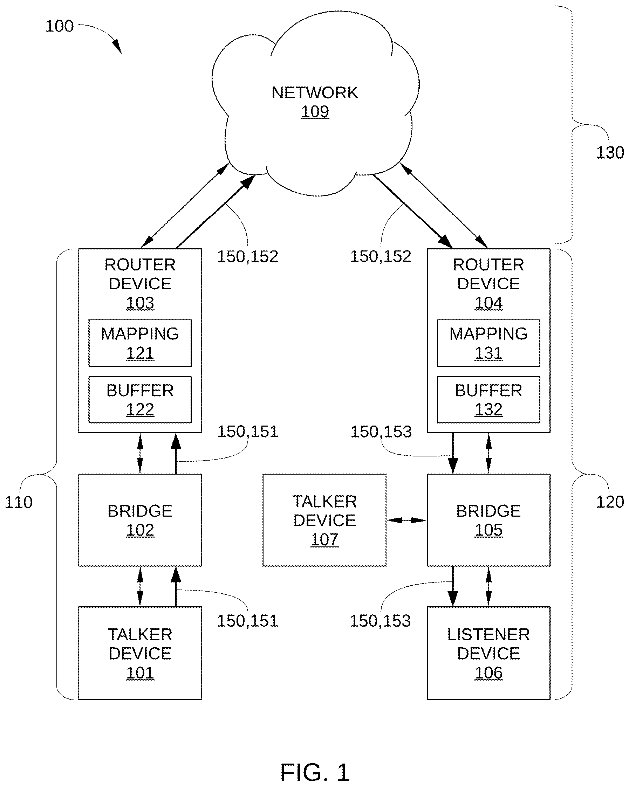

Figure 1 is a schematic diagram illustrating a network 100, configured to implement one or more aspects of various embodiments. Network 100 may be any technically feasible communication network, such as a network that is disposed within a campus of multiple buildings, extends across multiple rooms or floors of a single building, and/or includes locations in multiple cities or countries. As such, the topology of network 100 is generally not suited for use as a simple Audio Video Bridging (AVB) network, due to the latencies inherent in a network of this size and to the large number of possible talker and listener devices included therein. Instead, network 100 includes multiple network domains suitable for use as an AVB network, linked by a network domain configured to use an Open Systems Interconnection (OSI) Layer 3 protocol.

Specifically, network 100 includes a first network domain 110 that includes a talker device 101, a second network domain 120 that include a listener device 106, and a third network domain 130 that links first network domain 110 and second network domain 120, so that a time-sensitive data stream 150 can be established between talker device 101 and listener device 106. Data stream 150 includes multiple data stream segments: a data stream segment 151 that extends from talker device 101 to router device 103 via first network domain 110, a data stream segment 152 that extends from router device 103 to router device 104 via a third network domain 130, and a data stream segment 153 that extends from router device 104 to listener device 106 via second network domain 120.

First network domain 110 includes multiple network devices that are configured to use an OSI Layer 2 protocol, such as AVB Stream Reservation Protocol (SRP), so that synchronized, low-latency data streaming between these network devices is implemented with the on-time delivery, reservations, and guarantees of AVB. Thus, once first network domain 110 is initialized, first network domain 110 may be an SRP network domain, in which data can be transferred between different nodes of first network domain 110, i.e., talker and listener devices, in a synchronized fashion. For example, audio and video streams can be directed to one listener device within first network domain 110 from one or more talker devices within first network domain 110 without losing synchronization. In the embodiment illustrated in Figure 1, first network domain 110 includes talker device 101, a bridge 102, and a router device 103. In other embodiments, first network domain 110 may include any technically feasible number of network devices, for example on the order of 10s or even 100s of network devices that can communicate with each other via an OSI Layer 2 protocol.

Talker device 101 may be any technically feasible networking device configured to create a low-congestion, guaranteed delivery path to another network device, i.e., a listener device, in first network domain 110 via an OSI Layer 2 protocol, such as AVB SRP. In addition, talker device 101 may be configured to transmit data to any listener device or devices within first network domain 110 via such a guaranteed delivery path using any suitable protocol, such as Institute of Electrical and Electronics Engineers (IEEE) 1722 or Real-Time Transport Protocol (RTP). Examples of talker device 101 include audio and/or video sources, such as radios, CD players, cameras, and microphones. Bridge 102 may be any technically feasible networking hardware that connects multiple network segments within first network domain 110. Generally, bridge 102 operates in layer 2 of the OSI model, and therefore is configured to connect multiple network segments using a suitable OSI layer 2 protocol, such as AVB SRP.

Router device 103 may be any technically feasible networking device that forwards data packets between first network domain 110 and third network domain 130. Thus, for forwarding data packets from first network domain 110 to third network domain 130, router device 103 includes an egress port on first network domain 110 and an ingress port on third network domain 130. Similarly, for forwarding data packets from third network domain 130 to first network domain 110, router device 103 includes an egress port on third network domain 130 and an ingress port on first network domain 110. In some embodiments, router device 103 also includes a buffer 122 and a mapping 121.

Buffer 122 is a memory configured to temporarily store low transmission-latency data received from third network domain 130, such as audio and/or video data packets intended for a listener included in first network domain 110. In general, buffer 122 is configured to store such low transmission-latency data packets until such time that the SRP protocol of first network domain 110 indicates that the stored data packets are to be forwarded to the next network device in first network domain 110. Thus, buffer 122 can prevent or reduce the likelihood of latency associated with network 102 violating the time-sensitive guarantees of the SRP protocol of first network domain 110. Alternatively, buffer 122 may reside in any other network device in network domain 110 that is designed as a gateway used for synchronizing audio data received from a remote domain (e.g., second network domain 120) with first network domain 110.

Mapping 121 stores a relationship between particular data stream segments received by router device 103 (via first network domain 110) and respective data stream segments that exit router device 103 (via third network domain 130) and are configured to carry data to second network domain 120. For instance, to enable the establishment of data stream 150 between talker device 101 in first network domain 110 and listener device 106 in second network domain 120, mapping 121 associates data stream segment 151 with data stream segment 152. Furthermore, mapping 121 may store a plurality of relationships between data stream segments originating at any talker device included in first network domain 110 and corresponding data stream segments exiting router device 103 and associated with any listener device included in second network domain 120.

In some embodiments, mapping 121 for a particular data stream associates stream identification information of a first data stream segment that originates with a talker device of first network domain 110 with stream identification information of a second data stream segment that terminates in second network domain 120, where second network domain 120 includes a listener device that ultimately receives data propagated by the first and second data stream segments. For example, to enable establishment of data stream 150, mapping 121 associates stream identification information of data stream segment 151, which originates at talker device 101 and terminates at router device 103, with stream identification information of data stream segment 152, which originates at router device 103 and terminates at router device 104.

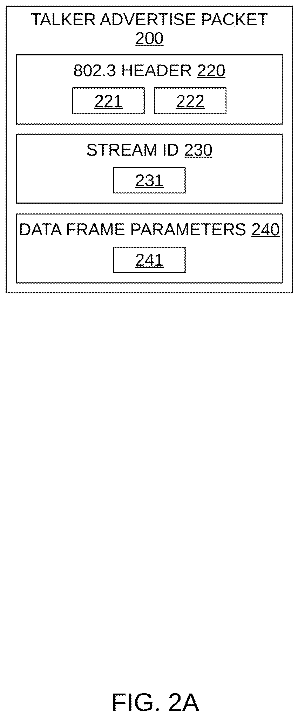

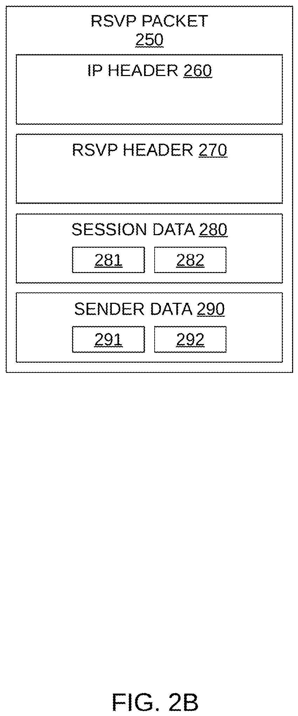

It is noted that data stream segment 151 is a data stream that is propagated by an OSI layer 2 protocol, such as SRP, whereas data stream segment 152 is a data stream that is propagated by an OSI layer 3 protocol, such as Integrated Services (IntServ). Thus, in some embodiments, the stream identification information of data stream segment 151 may include a 64-bit SRP stream ID, which may be formed from a 48-bit media access control (MAC) address and a 16-bit unique ID. In addition, the stream identification information may be provided to router device 103 via an SRP Talker Advertise message that includes the SRP stream ID for data stream segment 151. By contrast, because data stream segment 152 is propagated by IntServ, which relies on the Resource Reservation Protocol (RSVP) to perform admission control, the stream identification information of data stream segment 152 may include an RSVP Stream ID. An embodiment of a protocol packet that includes fields for stream identification information of data stream segment 151 and data stream segment 153 is illustrated in Figure 2A, and an embodiment of a protocol packet that includes fields for stream identification information of data stream segment 152 is illustrated in Figure 2B.

Figure 2A is a schematic diagram of a Talker Advertise packet 200, configured to implement one or more aspects of various embodiments. Talker advertise packet 200 illustrates one configuration of a packet that facilitates determination of stream identification information by network devices in network 100, particularly router device 103 and router device 104. As shown, data packet layout 200 includes, without limitation, an 802.3 header 220, a stream identification (ID) 230, and data frame parameters 240.

802.3 header 220 may include, without limitation, a MAC destination address 221 and a MAC source address 222. Stream ID 230 may include, without limitation, a Talker MAC source address 231, and data frame parameters 240 may include, without limitation, a stream MAC destination address 241. In some embodiments, the above-described stream identification information may be based at least in part MAC destination address 221, MAC source address 222, stream ID 230, Talker MAC source address 231, and/or stream MAC destination address 241. Thus, Talker Advertise packet 200 provides router device 103 and router device 104 stream identification information for data stream segments 151 and 153. In other embodiments, any other technically feasible stream identification information may be used by router device 103 and router device 104 to identify data stream segments 151 and 153.

Figure 2B is a schematic diagram of an RSVP protocol data unit (PDU) 250, configured to implement one or more aspects of various embodiments. RSVP PDU 250 illustrates one configuration of a packet that facilitates determination of stream identification information by network devices in network 100, particularly router device 103 and router device 104. As shown, RSVP PDU 250 includes, without limitation, an IP header 260, an RSVP header 270, session data 280, and sender data 290. Session data 280 may include, without limitation, a destination IP address 281 and a destination port number 282. Sender data 290 may include, without limitation, a sender IP address 291 and a sender port number 292. Based on destination IP address 281, destination port number 282, sender IP address 291, and/or destination port number 292, router device 103 and router device 104 can determine stream identification information for data received via, for example, an RSVP PDU 250 associated with an RSVP Path message or an RSVP Reserve message. Thus, RSVP PDU 250 provides router device 103 and router device 104 stream identification information for data stream segment 152. In other embodiments, any other technically feasible stream identification information may be used by router device 103 and router device 104 to identify data stream segment 152.

Returning to Figure 1, in some embodiments, mapping 121 is populated with the entries appropriate to implement one or more aspects of various embodiments by a suitably configured protocol, such as stream identification information for data stream segments 151 and 152. For example, such a protocol can be configured to modify mapping 121 when a request is made in network 100 for a data stream, e.g., data stream 150, to be established between a talker device in first network domain 110, e.g., talker device 101, and a listener device in second network domain 120, e.g., listener device 106. Alternatively or additionally, in some embodiments, mapping 121 may be populated with appropriate entries via manual entry of information via a text interface, or by any other technically feasible approach.

Second network domain 120 may be substantially similar in configuration and operation to first network domain 110. Therefore, second network domain 120 may be an SRP network domain in which data can be transferred between different nodes of second network domain 120, i.e., talker and listener devices, in a synchronized fashion. In the embodiment illustrated in Figure 1, second network domain 120 includes router device 104, a bridge 105, a listener device 106, and a talker device 107. In other embodiments, second network domain 120 may include any technically feasible number of network devices, for example on the order of 10s or even 100s of network devices that can communicate with each other via an OSI Layer 2 protocol, such as AVB SRP.

Router device 104 may be substantially similar in configuration to router device 103, except that router device 104 includes a buffer 132 and a mapping 131. Buffer 132 may be similar to buffer 122, except that buffer 132 is a memory configured to temporarily store low transmission-latency data received from third network domain 130, such as audio and/or video data packets intended for a listener device included in second network domain 120. Thus, buffer 132 can prevent or reduce the likelihood of latency associated with network 109 violating the time-sensitive guarantees of the SRP protocol of second network domain 120. Mapping 131 may be similar to mapping 121, except that mapping 131 stores a relationship between particular data stream segments received by router device 104 (via third network domain 130) and respective data stream segments that exit router device 104 (via second network domain 120) and are configured to carry data to listener device 106. For instance, to enable the establishment of data stream 150 between talker device 101 in first network domain 110 and listener device 106 in second network domain 120, mapping 131 associates data stream segment 152 with data stream segment 153 using stream identification information for data stream segment 152 and data stream segment 153.

Third network domain 130 includes, unlike first network domain 110 and second network domain 120, a network 109 to use an OSI Layer 3 protocol, such as the Internet, or any other technically feasible local area network (LAN) or wide-area network (WAN). Due to the size of network 109, third network domain 130 is typically configured to propagate data packets via RSVP, and therefore is incompatible with propagating data stream segment 151 and data stream segment 153. Thus, third network domain 130 is a Layer 3 domain. However, according to various embodiments, router device 103 and router device 104 are configured to link first network domain 110 and second network domain 120 via third network domain 130, as described below. Consequently, data stream segment 151, data stream segment 152, and data stream segment 153 are effectively treated as a single data stream, i.e., data stream 150, from talker device 101 to listener device 106.

In the embodiment illustrated in Figure 1, the network devices of network 100 (talker device 101, bridge 102, router device 103, router device 104, bridge 105, listener device 106, and talker device 107) are described having a particular functionality. In other embodiments, some or all of the network devices of network 100 may include the functionality of two or more devices. For instance, talker device 101 may also be configured as a listener device, a bridge, and/or a router.

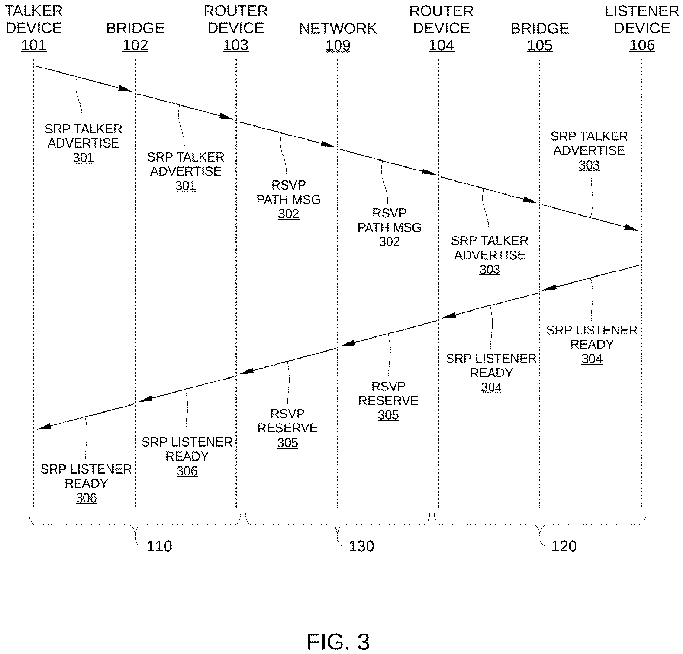

In operation, router device 103 is configured to establish data stream 150 through third network domain 130 by creating data stream segment 152 between router device 103 and router device 104 and linking data stream segment 151 to data stream segment 152. Specifically, router device 103 is configured to receive stream identification information for a data stream segment that originates with a talker device of first network domain 110, eg., talker device 101, terminates at router device 103, and is configured to stream data packets for delivery to a listener device of second network domain 120, e.g., listener device 106. Based on mapping 121, router device 103 is further configured to create, in conjunction with router device 104, data stream segment 152, as described below in conjunction with Figure 3. Similarly, router device 104 is configured to receive stream identification information for a data stream segment that originates with a router device of first network domain 110, e.g., router device 103, terminates at router device 104, and is configured to stream data packets for delivery to a listener device of second network domain 120, e.g., listener device 106. Based on mapping 131, router device 104 is further configured to create data stream segment 153 with listener device 106, as described below in conjunction with Figure 3.

Figure 3 schematically illustrates a protocol exchange that occurs to support transmission of data stream 150 between talker 101 and listener 106, according to various embodiments. In the embodiment illustrated in Figure 3, network domain 110 is an SRP domain in which at least talker device 101 is not an RSVP capable device, and network domain 120 is an SRP domain in which at least listener device 106 is not an RSVP capable device. Consequently, RSVP Path messages are not forwarded through either network domain 110 or network domain 120. Thus, the elements of first network domain 110 communicate with each other via an OSI Layer 2 protocol, such as SRP, and the elements of second network domain 120 communicate with each other via an OSI Layer 2 protocol, such as SRP, while router device 103 and router device 104 communicate with each other via third network domain 130 using an OSI Layer 3 protocol, such as IntServ.

When talker device 101 is ready to provide a data stream, talker device 101 sends a stream advertisement across first network domain 110, for example via an SRP Talker Advertise message 301. Bridge 102 registers and propagates the SRP Talker Advertise message 301 via normal SRP towards router device 103. Router device 103 receives the SRP Talker Advertise message and, based on stream identification information included therein and on mapping 121 (such as MAC destination address 221, MAC source address 222, Talker MAC source address 231, and/or stream MAC destination address 241), generates and forwards an RSVP Path message 302 to network 109. The RSVP Path message flows through network 109, following standard RSVP rules, eventually reaching router device 104. Based on stream identification information included in RSVP Path message 302, such as session data 280 and/or sender data 290, and on mapping 131, router device 104 generates an SRP Talker Advertise 303 message for data stream segment 153, since router device 104 is disposed at an edge of second network domain 120, i.e., the entry point of data stream 150 into second network domain 120. SRP Talker Advertise message 303 propagates through bridge 105 and on to listener device 106 following standard SRP rules.

Listener device 106 is eligible to receive the stream advertised, i.e., data stream segment 153, so listener device 106 initiates and forwards an SRP Listener Ready message 304 back to router device 104, along the path of SRP Talker Advertise message 303. Router device 104 receives SRP Listener Ready message 304 and, based on mapping 131 and stream identification information included in SRP Listener Ready message 304, such as session data 280 and/or sender data 290, router device 104 generates and forwards an RSVP Reserve message 305 back along the path followed by RSVP Path message 302. RSVP Reserve message 305 propagates through network 109 and arrives at router device 103. Based on stream identification information in mapping 121, router device 103 recognizes that RSVP Reserve message 305 is associated with SRP Talker Advertise 301 received from bridge 102. Therefore, router device 103 initiates an SRP Listener Ready message 306 that backtracks the associated SRP Talker Advertise message, i.e., SRP Talker Advertise message 301, back to talker device 101.

At this point, talker device 101 can initiate data stream 150, i.e., via data stream segment 151, to listener device 106, since all required reservations have been created. This is because SRP guarantees that if router device 103 is still receiving SRP Talker Advertise message 301, stream router device 103 knows that data stream segment 151 can be created, and associated bandwidth and resources will be reserved. Similarly, SRP guarantees that if router device 104 receives SRP Listener Ready message 304 while still receiving RSVP Path message 302, data stream segment 153 can be created and associated bandwidth and resources will be reserved. Thus, listener device 106 receives data stream 150 as synchronized audio and video data that can be synchronized with data received from talker devices included in second network domain 120, such as talker device 107.

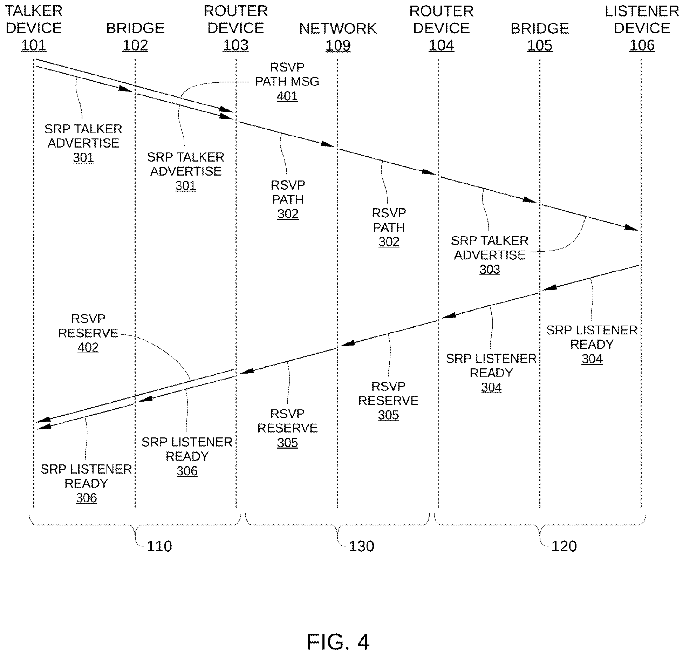

Figure 4 schematically illustrates a protocol exchange that occurs to support transmission of data stream 150 between talker 101 and listener 106, according to other embodiments. Unlike the embodiment illustrated in Figure 3, in the embodiment illustrated in Figure 4, first network domain 110 is not only an SRP domain, but also an RSVP domain. Thus, at least talker device 101 and router device 103 in first network domain 110 are RSVP capable devices, while network domain 120 is still only an SRP domain. Consequently, RSVP Path messages may be forwarded through network domain 110 but not through network domain 120. Thus, the elements of first network domain 110 may communicate with each other via SRP or RSVP, while the elements of second network domain 120 communicate with each other via SRP. Router device 103 and router device 104 communicate with each other via third network domain 130 using IntServ, as described above in conjunction with Figure 3.

As shown, the protocol exchange of Figure 4 is similar to the protocol exchange of Figure 3, with the following exceptions. When talker device 101 is ready to provide a data stream, talker device 101 sends SRP Talker Advertise message 301, but also initiates and transmits an RSVP Path message 401 across first network domain 110. Thus, router device 103 will receive SRP Talker Advertise message 301 and RSVP Path message 401, although there is no guarantee in which order these messages will arrive. Consequently, in the embodiment illustrated in Figure 4, router device 103 does not transmit RSVP Path message 302 until both RSVP Path message 401 and SRP Talker Advertise message 301 arrive. In some embodiments, router device 103 waits before transmitting RSVP Path message 302 based on stream identification information included in mapping 121 and on stream identification information included in RSVP Path message 401 and SRP Talker Advertise message 301. Upon receiving SRP Talker Advertise 301, router device 103 then knows that data stream segment 151 can be created at Layer 2 in first network domain 110, and then forwards RSVP Path message 401 to network 109, rather than generating and forwarding RSVP Path message 302, as shown in Figure 3. When router device 103 receives RSVP Reserve message 305, router device 103 not only initiates and forwards SRP Listener Ready 306 back to talker device 101. In addition, router device 103 initiates and forwards RSVP Reserve message 402 to talker device 101, via Layer 3 in first network domain 110.

Once the protocol exchange of Figure 4 is completed, data can be streamed from talker device 101 to listener device 106 with the quality-of-service and latency benefits of an AVB network. In the embodiment of Figure 4, talker device 101 and listener device 106 are each configured as a network device that is not RSVP capable. In alternative embodiments, talker device 101 may be configured as an RSVP-capable network device. In such embodiments, talker device 101 may transmit stream identification information to router device 103 via an RSVP Path message, such as RSVP Path message 401. Similarly, in alternative embodiments, listener device 106 may be configured as an RSVP-capable network device. In such embodiments, listener device 106 may transmit stream identification information to router device 104 via an RSVP Reserve message, such as RSVP Reserve message 402. Any other combination of RSVP-capable configurations of talker device 101 and listener device 106 may also be implemented according to some embodiments.

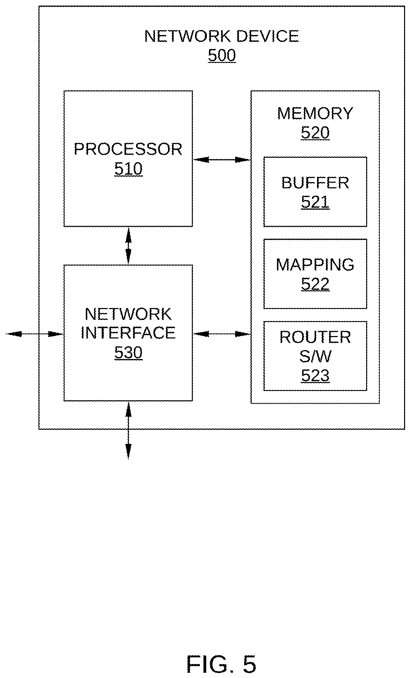

Figure 5 is a schematic illustration of a network device 500, configured to implement one or more aspects of various embodiments. Network device 500 may be employed as any of the network devices of network 100. Thus, network device 500 may include the functionality of one or more of talker device 101, bridge 102, router device 103, router device 104, bridge 105, listener device 106, and/or talker device 107. Network device 500 may include, without limitation, a processor 510, a memory 520, and a network interface 530.

Processor 510 is configured to read data from and write data to memory 520 and to access network 100 via network interface 530. In general, processor 510 may be any technically feasible hardware unit capable of processing data, executing instructions that enable the functionality of network device 500 as described herein. For example, when network device 500 is employed as a router device, such as router device 103 or router device 104, processor 510 is configured to execute instructions included in router software 523. Processor 510 may be any suitable processor implemented as a central processing unit (CPU), a graphics processing unit (GPU), an application-specific integrated circuit (ASIC), a field programmable gate array (FPGA), any other type of processing unit, or a combination of different processing units.

Memory 520 may include, without limitation, a random access memory (RAM) module, a flash memory unit, or any other type of memory unit or combination thereof. Memory 520 may include various software programs that can be executed by processor 510 and application data associated with such software programs, including, without limitation, router software 523. In embodiments in which network device 500 is configured as router device 103 or router device 104, memory 520 may include, without limitation, a buffer 521, a mapping 522, and router software 523. Buffer 521 may be similar to buffer 122 and/or buffer 132 in Figure 1, and mapping 522 may be similar to mapping 121 and/or mapping 131 in Figure 1.

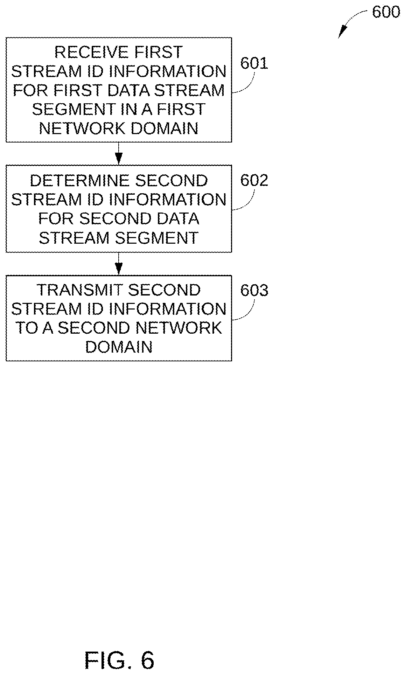

Figure 6 sets forth a flowchart of method steps for establishing a connection between a talker device and a listener device over a network, according to the various embodiments. Although the method steps are described with respect to the systems of Figures 1-5, persons skilled in the art will understand that any system configured to perform the method steps, in any order, falls within the scope of the various embodiments.

As shown, a method 600 begins at step 601, in which router device 103 receives first stream identification information for a first data stream segment disposed in first network domain 110. The first data stream segment is a portion of a data stream to be established between talker device 101 and listener device 106. For example, router device 103 may receive SRP Talker Advertise message 301, and the first stream identification information includes an SRP stream ID for data stream segment 151.

In step 602, router device 103 determines second stream identification information for an intermediary data stream segment that links first network domain 110 to second network domain 120. For example, router device 103 determines RSVP stream ID of data stream segment 152, based at least in part on information included in mapping 121, such as a mapping of an SRP stream ID for data stream segment 151 to an RSVP stream ID of data stream segment 152. Thus, RSVP stream ID for data stream segment 152 is determined from mapping 121 and the SRP stream ID for data stream segment 151.

In step 603, router device 103 transmits the second stream identification information to second network domain 120 via an OSI Layer 3 protocol, such as IntServ. For example, the second stream identification information may be an RSVP stream ID included in RSVP Path message 302, so the second stream identification information is transmitted to router device 104 as an RSVP stream ID. In embodiments in which first network domain 110 is an RSVP-capable domain, router device 103 transmits the second stream identification information responsive to receiving SRP Talker Advertise message 301. Thus, in such embodiments, router device 103 waits until SRP indicates that data stream segment 151 is ready before sending RSVP Path message 302.

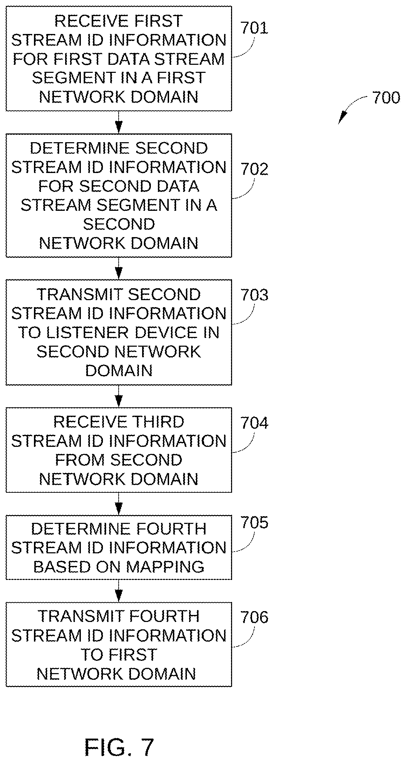

Figure 7 sets forth a flowchart of method steps for establishing a connection between a talker device and a listener device over a network, according to the various embodiments. Although the method steps are described with respect to the systems of Figures 1-5, persons skilled in the art will understand that any system configured to perform the method steps, in any order, falls within the scope of the various embodiments.

As shown, a method 700 begins at step 701, in which router device 104 receives first stream identification information for a first data stream segment disposed in third network domain 130, wherein the first stream identification information is received via an OSI Layer 3 protocol. The first data stream segment is a portion of a data stream to be established between talker device 101 and listener device 106. For example, router device 104 may receive RSVP Path message 302, and the first stream identification information includes an RSVP stream ID for data stream segment 152.

In step 702, router device 104 determines second stream identification information for a second data stream segment in second network domain 120 (i.e., data stream segment 153), where second network domain 120 is an SRP domain that includes listener device 106. Router device 104 determines the second stream identification information based at least in part on information included in mapping 131, since mapping 131 associates first stream identification information with second stream identification information. For example, router device 104 determines the SRP stream ID for data stream segment 153, based at least in part on information included in mapping 131, such as the RSVP stream ID for data stream segment 152.

In step 703, router device 104 transmits the second stream identification information to listener device 106. For example, router device 104 may initiate and forward SRP Talker Advertise message 303 to listener device 106, to establish the second data stream segment, i.e., data stream segment 153. In some embodiments, for ease of troubleshooting, the second stream identification information for data stream segment 153, for example the SRP stream ID, may be the same as the stream identification information for data stream segment 151.

In step 704, router device 104 receives third stream identification information from second network domain 120. For example, router device 104 receives SRP Listener Ready message 304, which originates from listener device 106.

In step 705, router device 104 determines fourth stream identification information based at least in part on information included in mapping 131. For example, mapping 131 associates data stream segment 152 and data stream segment 153. Thus, when router device 104 receives SRP Listener Ready message 304 via data stream segment 153, router device 104 knows that data stream segment 153 is established, and initiates RSVP Reserve message 305 for data stream segment 152.

In step 706, router device 104 transmits the fourth stream identification information, such as RSVP Reserve message 305, via OSI Layer 3 protocol to network domain 110. In embodiments in which network domain 120 is also RSVP-capable, router device 104 transmits the fourth stream identification information responsive to receiving both an SRP Listener Ready message originating from listener device 106 and RSVP Reserve message 305.

As set forth above, by implementing methods 600 and 700, a connection can be established between a talker device in one SRP domain and a listener device in a different SRP domain. Furthermore, even though the two SRP domains are separated by the Internet or any other network domain in which SRP cannot be implemented, audio and video data arrive via the connection at the listener device with the quality-of-service associated with an AVB SRP network.

In sum, various embodiments set forth techniques for establishing a connection between a talker device and a listener device over a network. Specifically, a first Layer 2 network domain, such as an AVB SRP network, is linked to a second Layer 2 network domain via a Layer 3 network domain, such as the Internet. By mapping a data stream segment in the first Layer 2 domain to a data stream segment in the Layer 3 domain, and by mapping the data stream segment in the Layer 3 domain to a data stream segment in the second Layer 2 domain, a single data stream can be effectively created between a talker device in the first Layer 2 network domain and a listener device in the second Layer 2 network domain. At least one advantage of the disclosed embodiments is that the quality-of-service and latency benefits of an AVB network can be implemented across a data network that is geographically extensive and/or includes a large number of possible talker/listener devices.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable processors or gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A method of establishing a data stream between a talker device (101) and a listener device (106) over a network (109), the method comprising:
receiving, at a network device (103), first stream identification information for a first data stream segment disposed in a first layer 2 domain (110) from the talker device;
wherein the first stream identification information comprises a stream reservation protocol, SRP, stream identification received with an SRP Talker advertise message (301) and a resource reservation protocol, RSVP, stream identification information received with an RSVP Path message (401),
determining, at the network device (103), based at least in part on a mapping (121) storing relationships between data stream segments, and on the SRP stream identification and the RSVP stream identification contained in the first stream identification information, a second stream identification information for a second data stream segment that links the first layer 2 domain to a second layer 2 domain (120) that includes the listener device (106); and
transmitting, from the network device (103), the second stream identification information to the second layer 2 domain via a layer 3 protocol.

2. The method of claim 1, wherein transmitting the second stream identification information is performed in response to receiving the SRP talker advertise message (301) from the talker device (101).

3. The method of claim 1, further comprising receiving a data packet via the first data stream segment; and transmitting the data packet to the second layer 2 domain via the second data stream segment.

4. The method of claim 1, further comprising receiving an RSVP reserve message (305) from the second layer 2 domain via the layer 3 protocol, and in response, transmitting an SRP listener ready message (306) to the talker device (101).

5. The method of claim 1, further comprising receiving a data packet via the first data stream segment; and transmitting the data packet to the second layer 2 domain via the second data stream segment.

6. The method of claim 1, further comprising, prior to transmitting the data packet to the second layer 2 domain (120), adding layer 2 header information to the data packet.

7. The method of claim 1, wherein the layer 3 protocol comprises an open systems interconnection, OSI, layer 3 protocol.

8. A computer program product comprising computer readable medium (520) storing instructions that, when executed by a processor, cause or configure the processor to perform the steps of the method of any preceding claim.

9. The computer program product of claim 8, wherein transmitting the second stream identification information is performed in response to receiving the SRP talker advertise message (301) from the talker device (101).

10. The computer program product of claim 8, wherein the first layer 2 domain (110) comprises an SRP domain.

11. A network device (103, 500), comprising:
a memory (520) that stores router software; and
a processor (510) that is coupled to the memory and, when executing the router software, is
configured to:
receive first stream identification information for a first data stream segment disposed
in a first layer 2 domain (110) from a talker device (101);
wherein the first stream identification information comprises a stream reservation protocol, SRP, stream identification received with an SRP Talker advertise message (301) and a resource reservation protocol, RSVP, stream identification information received with an RSVP Path message (401),
determine, based at least in part on a mapping (121) storing relationships between data stream segments, and on the SRP stream identification and the RSVP stream identification contained in the first stream identification information, a second stream identification information for a second data stream segment that links the first layer 2 domain (110) to a second layer 2 domain (120) that includes a listener device (106); and
transmit the second stream identification information to the second layer 2 domain (120) via a layer 3 protocol.

12. The network device of claim 11, wherein the first layer 2 domain (110) comprises an SRP domain.

## Patentansprüche

1. Verfahren zum Einrichten eines Datenstroms zwischen einer Talker-Vorrichtung (101) und einer Listener-Vorrichtung (106) über ein Netzwerk (109), wobei das Verfahren Folgendes umfasst:
Empfangen von ersten Stromidentifikationsinformationen für ein erstes Datenstromsegment, das in einer ersten Schicht-2-Domäne (110) angeordnet ist, von der Talker-Vorrichtung an einer Netzwerkvorrichtung (103);
wobei die ersten Stromidentifikationsinformationen eine Stromidentifikation eines Stromreservierungsprotokolls, SRP, die mit einer SRP-Talker-Advertise-Nachricht (301) empfangen wird und eine Stromidentifikationsinformation eines Ressourcenreservierungsprotokolls, RSVP, umfassen, die mit einer RSVP-Path-Nachricht (401) empfangen wird,
Bestimmen, an der Netzwerkvorrichtung (103), zumindest teilweise auf Grundlage einer Zuordnung (121), die Beziehungen zwischen Datenstromsegmenten speichert, und der SRP-Stromidentifikation sowie der RSVP-Stromidentifikation, die in den ersten Stromidentifikationsinformationen enthalten sind, einer zweiten Stromidentifikationsinformation für ein zweites Datenstromsegment, das die erste Schicht-2-Domäne mit einer zweiten Schicht-2-Domäne (120) verknüpft, welche die Listener-Vorrichtung (106) einschließt; und
Übertragen der zweiten Stromidentifikationsinformation von der Netzwerkvorrichtung (103) zu der zweiten Schicht-2-Domäne über ein Schicht-3-Protokoll.

2. Verfahren nach Anspruch 1, wobei das Übertragen der zweiten Stromidentifikationsinformation als Reaktion auf das Empfangen der SRP-Talker-Advertise-Nachricht (301) von der Talker-Vorrichtung (101) durchgeführt wird.

3. Verfahren nach Anspruch 1, ferner umfassend das Empfangen eines Datenpakets über das erste Datenstromsegment; und das Übertragen des Datenpakets zu der zweiten Schicht-2-Domäne über das zweite Datenstromsegment.

4. Verfahren nach Anspruch 1, ferner umfassend das Empfangen einer RSVP-Reserve-Nachricht (305) von der zweiten Schicht-2-Domäne über das Schicht-3-Protokoll und als Reaktion darauf das Übertragen einer SRP-Listener-Ready-Nachricht (306) zu der Talker-Vorrichtung (101).

5. Verfahren nach Anspruch 1, ferner umfassend das Empfangen eines Datenpakets über das erste Datenstromsegment; und das Übertragen des Datenpakets zu der zweiten Schicht-2-Domäne über das zweite Datenstromsegment.

6. Verfahren nach Anspruch 1, ferner umfassend, vor dem Übertragen des Datenpakets zu der zweiten Schicht-2-Domäne (120), das Hinzufügen von Schicht-2-Header-Informationen zu dem Datenpaket.

7. Verfahren nach Anspruch 1, wobei das Schicht-3-Protokoll ein Open-Systems-Interconnection-, OSI-, Schicht-3-Protokoll umfasst.

8. Computerprogrammprodukt, umfassend ein computerlesbares Medium (520), auf dem Anweisungen gespeichert sind, die, wenn sie von einem Prozessor ausgeführt werden, veranlassen, dass der Prozessor die Schritte des Verfahrens nach einem vorhergehenden Anspruch durchführt, oder ihn dazu konfigurieren.

9. Computerprogrammprodukt nach Anspruch 8, wobei das Übertragen der zweiten Stromidentifikationsinformation als Reaktion auf das Empfangen der SRP-Talker-Advertise-Nachricht (301) von der Talker-Vorrichtung (101) durchgeführt wird.

10. Computerprogrammprodukt nach Anspruch 8, wobei die erste Schicht-2-Domäne (110) eine SRP-Domäne umfasst.

11. Netzwerkvorrichtung (103, 500), umfassend:
einen Speicher (520), der Router-Software speichert; und
einen Prozessor (510), der an den Speicher gekoppelt ist und beim Ausführen der Router-Software zu Folgendem konfiguriert ist:
Empfangen erster Stromidentifikationsinformationen für ein erstes Datenstromsegment, das in einer ersten Schicht-2-Domäne (110) angeordnet ist, von einer Talker-Vorrichtung (101) ;
wobei die ersten Stromidentifikationsinformationen eine Stromidentifikation eines Stromreservierungsprotokolls, SRP, die mit einer SRP-Talker-Advertise-Nachricht (301) empfangen wird und eine Stromidentifikationsinformation eines Ressourcenreservierungsprotokolls, RSVP, umfassen, die mit einer RSVP-Path-Nachricht (401) empfangen wird,
Bestimmen, zumindest teilweise auf Grundlage einer Zuordnung (121), die Beziehungen zwischen Datenstromsegmenten speichert, und der SRP-Stromidentifikation sowie der RSVP-Stromidentifikation, die in den ersten Stromidentifikationsinformationen enthalten sind, einer zweiten Stromidentifikationsinformation für ein zweites Datenstromsegment, das die erste Schicht-2-Domäne (110) mit einer zweiten Schicht-2-Domäne (120) verknüpft, die eine Listener-Vorrichtung (106) einschließt; und
Übertragen der zweiten Stromidentifikationsinformation zu der zweiten Schicht-2-Domäne (120) über ein Schicht-3-Protokoll.

12. Netzwerkvorrichtung nach Anspruch 11, wobei die erste Schicht-2-Domäne (110) eine SRP-Domäne umfasst.

## Revendications

1. Procédé d'établissement d'un flux de données entre un dispositif émetteur (101) et un dispositif récepteur (106) sur un réseau (109), le procédé comprenant :
la réception, au niveau d'un dispositif réseau (103), d'informations d'identification de premier flux pour un premier segment de flux de données disposé dans un premier domaine de couche 2 (110) en provenance du dispositif émetteur ;
dans lequel les informations d'identification de premier flux comprennent une identification de flux de protocole de réservation de flux, SRP, reçue avec un message d'annonce émetteur SRP (301) et des informations d'identification de flux de protocole de réservation de ressources, RSVP, reçues avec un message de chemin RSVP (401),
la détermination, au niveau du dispositif réseau (103), sur la base au moins en partie d'un mappage (121) stockant les relations entre les segments de flux de données, et sur la base de l'identification de flux SRP et de l'identification de flux RSVP contenus dans les informations d'identification de premier flux, d'informations d'identification de second flux pour un second segment de flux de données qui relie le premier domaine de couche 2 à un second domaine (120) de couche 2 qui comporte le dispositif récepteur (106) ; et
la transmission, depuis le dispositif réseau (103), des informations d'identification de second flux au second domaine de couche 2 par l'intermédiaire d'un protocole de couche 3.

2. Procédé selon la revendication 1, dans lequel la transmission des informations d'identification de second flux est effectuée en réponse à la réception du message d'annonce émetteur SRP (301) du dispositif émetteur (101).

3. Procédé selon la revendication 1, comprenant en outre la réception d'un paquet de données par l'intermédiaire du premier segment de flux de données ; et la transmission du paquet de données au second domaine de couche 2 par l' intermédiaire du second segment de flux de données.

4. Procédé selon la revendication 1, comprenant en outre la réception d'un message de réserve RSVP (305) en provenance du second domaine de couche 2 par l'intermédiaire du protocole de couche 3, et en réponse, la transmission d'un message prêt pour récepteur SRP (306) au dispositif émetteur (101).

5. Procédé selon la revendication 1, comprenant en outre la réception d'un paquet de données par l'intermédiaire du premier segment de flux de données ; et la transmission du paquet de données au second domaine de couche 2 par l' intermédiaire du second segment de flux de données.

6. Procédé selon la revendication 1, comprenant en outre, avant de transmettre le paquet de données au second domaine de couche 2 (120), l'ajout d'informations d'en-tête de couche 2 au paquet de données.

7. Procédé selon la revendication 1, dans lequel le protocole de couche 3 comprend un protocole d'interconnexion de systèmes ouverts, OSI, de couche 3.

8. Produit de programme informatique comprenant un support lisible par ordinateur (520) stockant des instructions qui, lorsqu'elles sont exécutées par un processeur, amènent ou configurent le processeur pour exécuter les étapes du procédé selon une quelconque revendication précédente.

9. Produit de programme informatique selon la revendication 8, dans lequel la transmission des informations d'identification de second flux est effectuée en réponse à la réception du message d'annonce émetteur SRP (301) du dispositif émetteur (101).

10. Produit de programme informatique selon la revendication 8, dans lequel le premier domaine de couche 2 (110) comprend un domaine SRP.

11. Dispositif réseau (103, 500), comprenant :
une mémoire (520) qui stocke le logiciel de routeur ; et
un processeur (510) qui est couplé à la mémoire et, lors de l'exécution du logiciel de routeur, est conçu pour :
recevoir des informations d'identification de premier flux pour un premier segment de flux de données disposé dans un premier domaine de couche 2 (110) en provenance du dispositif émetteur (101) ;
dans lequel les informations d'identification de premier flux comprennent une identification de flux de protocole de réservation de flux, SRP, reçue avec un message d'annonce émetteur SRP (301) et des informations d'identification de flux de protocole de réservation de ressources, RSVP, reçues avec un message de chemin RSVP (401),
déterminer, sur la base au moins en partie d'un mappage (121) stockant les relations entre les segments de flux de données, et sur la base de l'identification de flux SRP et de l'identification de flux RSVP contenus dans les informations d'identification de premier flux, des informations d'identification de second flux pour un second segment de flux de données qui relie le premier domaine (110) de couche 2 à un second domaine (120) de couche 2 qui comporte un dispositif récepteur (106) ; et
transmettre les informations d'identification de second flux au second domaine (120) de couche 2 par l'intermédiaire d'un protocole de couche 3.

12. Dispositif réseau selon la revendication 11, dans lequel le premier domaine de couche 2 (110) comprend un domaine SRP.
